# EUROPEAN PATENT APPLICATION

(11) **EP 3 459 670 A1**
(43) Date of publication of application: **27.03.2019**
(21) Application number: 18196699.5
(22) Date of filing: 25.09.2018
(51) Int. Cl.: B23K 9/10, B23K 9/167, B23K 9/09

(54) **MOTOR DRIVEN WELDER AND CONTROL METHOD THEREOF**

(30) Priority: 25.09.2017 IT 201700106957
(71) Applicant: BCS S.p.A., 20123 Milano (IT)
(72) Inventor: BIFFI, Giorgio, 20123 MILANO (IT)
(74) Representative: Martini, Gabriele

(57) **Abstract**

A motor driven welder comprising:
an internal combustion engine (2);
an electric generator (3) connected to the internal combustion engine (2) for being driven by the internal combustion engine (2) and for receiving kinetic energy from the internal combustion engine (2), and having a first electrical output (8) for providing electrical energy;
a bridge (4) of controllable switches electrically connected to the first output (8) of the electric generator (3) for receiving electrical energy, and comprising a second electrical output (10) for supplying a welding tong (6) through an output electrical current (Iout);
a control device (5) connected to the bridge (4) of controllable switches, for controlling the switches, and connected to the second electrical output (10) for detecting the output electrical current (Iout);
the control device (5) being configured for controlling the bridge (4) of controllable switches so that the second electrical output (10) provides an output electrical current (Iout) which is at least in a periodic time interval, in particular a maximum current value (Imax) and a minimum current value (Imin) of the periodic waveform, which are both greater than zero or both lower than zero.

## Description

### CROSS-REFERENCE TO RELATED APPLICATIONS

This application claims priority from Italian Patent Application No. 102017000106957 filed on September 25, 2017.

### TECHNICAL FIELD

The invention relates to a motor driven welder and to a method for controlling a motor driven welder.

More in detail, the invention relates to a motor driven welder comprising:
an internal combustion engine;
an electric generator connected to the internal combustion engine for being driven by the internal combustion engine and for receiving kinetic energy from the internal combustion engine, and having a first output for providing electrical energy;
a bridge of switches electrically connected to the first output of the electric generator for receiving electrical energy from the generator, and comprising a second direct current output;
a welding tong connected to the second direct current output for being supplied.

### BACKGROUND ART

In use, the welding tong is supplied by the second direct current output and an operator uses the welding tong for carrying out a welding process known as Tungsten Inert Gas with a scratch start technique.

This motor driven welder is affected by the drawback of producing a weld that is not ideal, as the weld itself can be contaminated by tungsten.

Another drawback of the prior art lies in the fact that the motor driven welder is not easy to be used, since it develops high temperatures on the surface to be welded and these temperatures damage the material to be welded and/or jeopardize the quality of the weld itself.

### DISCLOSURE OF INVENTION

An object of the invention is to provide a motor driven welder capable of limiting at least one of the drawbacks of the prior art.

According to the invention there is provided a motor driven welder comprising: an internal combustion engine; an electric generator connected to the internal combustion engine for being driven by the internal combustion engine and for receiving kinetic energy from the internal combustion engine, and having a first electrical output for providing electrical energy; a bridge of controllable switches electrically connected to the first output of the electric generator for receiving electrical energy, and comprising a second electrical output for supplying a welding tong through an output electrical current; a control device connected to the bridge of controllable switches, for controlling the switches, and coupled to the second electrical output for detecting the output electrical current; the control device being configured for controlling the bridge of controllable switches so that the second electrical output provides an output electrical current which is at least in a periodic time interval, in particular a maximum current value and a minimum current value of the periodic waveform are both greater than zero or both lower than zero.

Thanks to this invention, the welding process is better compared to the prior art because the welded surface has a more homogeneous surface; the welded pieces have smaller thermally altered areas compared to the prior art; the two pieces to be welded get less heated up and, finally, the quality parameters of the weld are better compared to the prior art.

A further object of the invention is to provide a method for controlling a motor driven welder, which reduces at least one of the drawbacks of the prior art.

According to the invention there is provided a control method of a motor driven welder; the motor driven welder comprising an internal combustion engine; an electric generator connected to the internal combustion engine for being driven by the internal combustion engine and for receiving kinetic energy from the internal combustion engine, and having a first electrical output for supplying electrical energy; a bridge of controllable switches electrically connected to the first electrical output of the electric generator for receiving electrical energy and comprising a second electrical output for supplying a welding tong through an output electrical current; the method comprising the steps of: controlling the delivery of the output electrical current so that it is at least in a periodic time interval, in particular a maximum current value and a minimum current value of the periodic waveform of the output electrical current are both greater than zero or both less than zero.

### BRIEF DESCRIPTION OF THE DRAWINGS

Further features and advantages of the invention will be best understood upon perusal of the following description of non-limiting embodiments thereof, with reference to the accompanying drawing, wherein:
- figure 1 is a diagram of a motor driven welder according to the embodiments of the invention;
- figure 2 is a chart of the development of an output electrical current of the motor driven welder of figure 1; and
- figure 3 is a detail of the development of the output electrical current in an alternative embodiment of the invention.

### BEST MODE FOR CARRYING OUT THE INVENTION

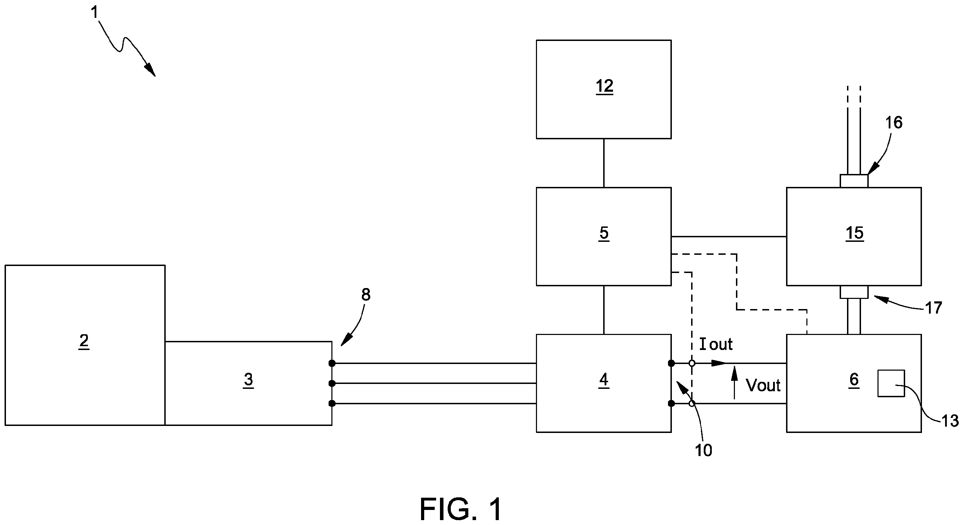

With reference to figure 1, number 1 schematically indicates a motor driven welder.

In particular, the motor driven welder 1 comprises an internal combustion engine 2; and electric generator; a bridge 4 of controllable switches; a control device 5 and a welding tong 6.

The electric generator 3 is connected to the internal combustion engine 2 for being driven by the internal combustion engine 2 through kinetic energy. Furthermore, the electric generator 3 has a first electrical output 8 for supplying electrical energy. In other words, the internal combustion engine 2 is connected to the rotor (not shown in the accompanying figures) of the electric generator 3 and causes the rotation thereof. The electric generator 3 generates electrical energy from the kinetic energy provided by the internal combustion engine 2. In particular, the electric generator 3 supplies electrical energy through the first electrical output 8. More in detail, the electric generator 3 supplies an alternating electrical voltage, hence, an alternating electrical current, preferably a three-phase current, through the first electrical output 8.

The bridge 4 of controllable switches is electrically connected to the first electrical output 8 of the electric generator 3 and receives electrical energy from the electric generator 3. In particular, the bridge 4 of controllable switches receives an alternating electrical voltage, hence an alternating electrical current, preferably a three-phase current, from the electric generator 3.

The bridge 4 of controllable switches is a preferably three-phase rectifier comprising a plurality of controllable switches, for example controllable power diodes, GTOs, IGBTs, power MOSFETs or others. In particular, the rectifier can have a preferably three-phase Graetz bridge configuration.

The bridge 4 of controllable switches receives the alternating electrical voltage and converts it through a suitable control of the plurality of controllable switches. In particular, the bridge 4 of switches comprises a second electrical output 10, through which it supplies an output electrical voltage Vout and an output electrical current Iout.

With reference to figure 1, the bridge of switches 4 is connected to the control device 5. More in detail, the control device 5 is connected to the second electrical output 10 for detecting the output electrical current lout and is connected to the plurality of switches of the bridge 4 of switches for controlling the bridge 4 of switches based on the output electrical current lout detected at the second electrical output 10. More in detail, the control device 5 is configured for controlling the bridge 4 of controllable switches with a current control and, in particular, so that the second electrical output 10 delivers an output electrical current lout which, at least in a time interval, has a periodic waveform.

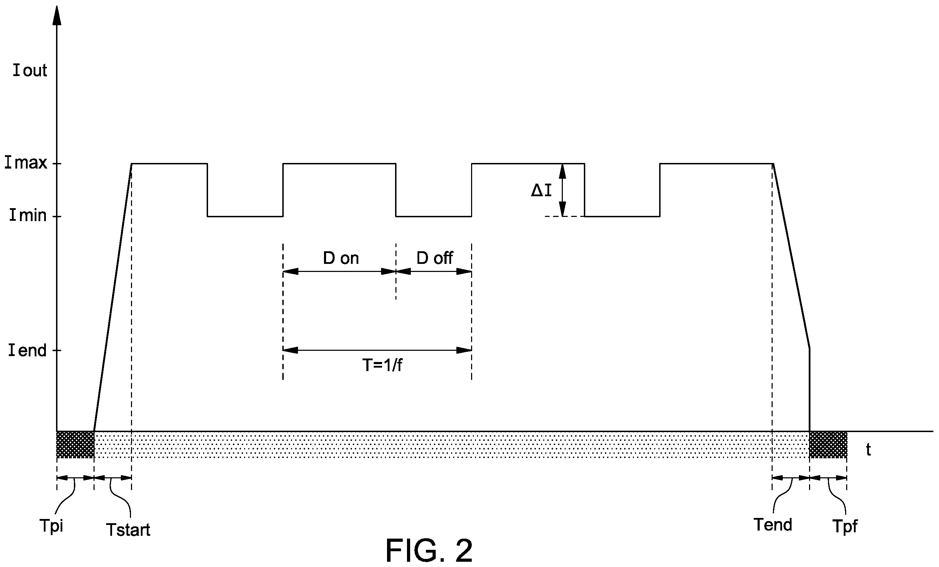

With reference to figure 2, the periodic waveform of the output electrical current lout has a maximum value Imax and a minimum value Imin, which are both greater than zero, and a period T. In an alternative embodiment of the invention, which is not shown in the accompanying figures, the maximum value Imax and the minimum value Imin of the output electrical current lout within the period T are both smaller than zero.

With reference to figures 1 and 2, the welding tong 6 is connected to the second electrical output 10 and is supplied with the output electrical current Iout.

The motor driven welder comprises a user interface 12 configured for receiving a first command from an operator for setting the maximum current value Imax of the periodic waveform of the output electrical current Iout. The maximum current value Imax defines the nominal welding current.

The control device 5 is connected to the user interface 12 for receiving the first command and is configured for controlling the bridge 4 of switches, in particular through a current control, so that the maximum current value Imax of the periodic waveform of the output electrical current lout is equal to that set up by the operator through the first command.

The user interface 12 is configured for receiving a second command from an operator for selecting a frequency value f of the periodic waveform of the output electrical current Iout. Alternatively, the user interface 12 is configured for receiving a second command from an operator for selecting a period T of the periodic waveform of the output electrical current Iout. In this case, the control device 5 defines the frequency f from the period T.

The control device 5 is connected to the user interface 12 for receiving the second command and is configured for controlling the bridge 4 of switches, in particular through a current control, so that the frequency f of the periodic waveform of the output electrical current lout is equal to that set up by the operator through the second command.

The motor driven welder comprises a user interface 12 configured for receiving a third command from an operator for selecting a duty cycle value DT of the periodic waveform of the output electrical current Iout. The duty cycle value DT is defined as ratio between a time Don and a time Doff, in other words as ratio between the time Don in which the output electrical current lout assumes the maximum current value Imax and the time Doff in which the output electrical current lout assumes the minimum current value Imin.

The control device 5 is connected to the user interface 12 for receiving the third command and is configured for controlling the bridge 4 of switches, in particular through a current control, so that the duty cycle dT of the periodic waveform of the output electrical current lout is equal to that set up by the operator through the third command.

Furthermore, the user interface 12 is configured for receiving a fourth command from an operator for setting the minimum current value Imin of the periodic waveform of the output electrical current Iout.

The control device 5 is connected to the user interface 12 for receiving the fourth command and is configured for act upon the switches of the bridge 4 of switches, in particular through a current control, so that the minimum current value Imin of the periodic waveform of the output electrical current lout is equal to that set up by the operator through the fourth command. With reference to figure 2, ∧I is the difference between Imax and Imin.

In a preferred alternative embodiment, the user interface 12 receives a fourth command indicating a fractional value less than 1. The control device 5 calculates the minimum current value Imin as equal to the fractional value multiplied by the maximum current value Imax. In this embodiment, the control device 5 controls the bridge 4 of switches so that the minimum current value Imin is equal to the fractional value multiplied by the maximum current value Imax.

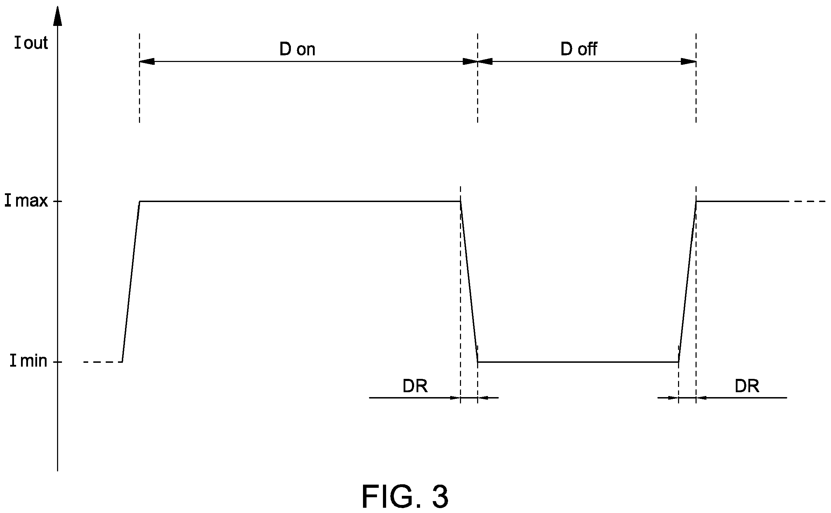

In a non-limiting embodiment of the invention, which is shown in figure 3, the user interface 12 is configured for receiving a fifth command from an operator for setting a ramp time Dr of the periodic waveform of the output electrical current Iout. More in detail, the ramp time Dr is the time needed by the periodic waveform to shift from the maximum current value Imax to the minimum current value Imin or vice versa during each transition. In said embodiment, the control device 5 is connected to the user interface 12 for receiving the fifth command and controlling the bridge 4 of switches, in particular through a current control, so that the ramp time Dr of the periodic waveform of the output electrical current lout is equal to that set up by the operator through the fifth command.

With reference to figures 1 and 2, the motor driven welder 1 is controlled by the control device 5 so as to implement a welding process with Tungsten electrodes and the use of inert gas (i.e. Tungsten Inert Gas Wwlding) and with the function of triggering the arc by contact.

More in detail, in order to fulfil the function of triggering the arc by contact, the control device 5 is configured for providing, upon triggering, an output electrical current lout which gradually increases up to the maximum current value Imax, so as not to damage the tip of the tungsten electrode when it is contact with the material to be welded.

More in detail, the welding tong 6 comprises a button 13 to be pressed by the operator when he wants to start welding, so as to send a first signal. The control device 5 is connected to the welding tong 6 and is configured for receiving the first signal from the welding tong 6.

More in detail, the operator causes the welding tong 6 to come into contact with the piece to be welded, subsequently presses the button 13, and then moves the welding tong 6 away from the piece to be welded, in this instant a spark is created, which causes the ignition of the arc. Then, the control device 5 increases the output electrical current lout up to the maximum current value Imax within a defined time interval called start time interval Tstart.

More in detail, the control device 5 is configured for acting as follows:
a) it detects that the welding tong 6 is in contact with a piece to be welded, in particular it detects that the welding tong is grounded;
b) it receives the start command through the activation of the button 13 of the welding tong 6;
c) it controls the bridge 4 of switches so that it delivers an output electrical current lout having a time profile with the shape of an ascending ramp and which gradually increases from a zero current value to a maximum current value Imz within the time Tstart present in the control device 5;
d) once the maximum current value Imax is reached, the control device 5 controls the bridge 4 of switches so that it supplies an output electrical current lout having the periodic waveform discussed above and which changes from the minimum current value Imin to the maximum current value Imax according to the parameters described above, in particular a square waveform with the maximum current value Imax, the minimum current value Imin, the frequency f and the duty cycle dt set forth above.

In an alternative embodiment, the order of steps a) and b) can be reversed.

Furthermore, the control device 5 is configured for interrupting the welding when the button 13 is released. More in detail, when the control device 5 detects that the button 13 has been released, it acts upon the bridge 4 of switches so as to reduce the output electrical current lout in a gradual manner within an end deramp time Tend up to an end current value Iend. More in detail, the control device 5 is configured for acting upon the bridge of switches 4 so as to reduce the output electrical current lout from the instantaneous value, which can be the maximum current value Imax or the minimum current value Imin, up to the end current value lend within an end deramp time Tend following a time profile with the shape of a descending ramp.

The user interface 12 is configured for receiving a sixth command from an operator for setting an end deramp time Tend of the output electrical current Iout. The user interface 12 is configured for receiving a seventh command from an operator for setting an end current value lend of the output electrical current Iout. The control device 5 is connected to the user interface 12 for receiving the sixth command and the seventh command and for controlling the bridge 4 of switches, in particular through a current control, so that the end deramp time Tend is equal to that set up by the operator.

Furthermore, the control device 5 is configured for subsequently bringing the output electrical current lout from the end current value lend to a zero current value within a substantially instantaneous time.

In a preferred embodiment, the third command, the fourth command, the fifth command, the sixth command and the seventh command are protected by a password or by a code. More in detail, the user interface 12 is configured for activating one of the commands from the third one to the seventh one only in case the operator enters a code or a password through the user interface 12, for example using a keypad available on the user interface 12.

In a preferred, though non-limiting embodiment of the invention, the motor driven welder 1 comprises a solenoid valve 15 connected to the control device 5 and having a valve input 16 for receiving gas as well as a valve outlet 17 for delivering gas. The valve inlet 16 of the solenoid valve 15 is connected to a duct transporting the inert gas for the welding. The valve outlet 17 is connected to a duct connecting the solenoid valve 15 to the welding tong 6. The welding tong 6 comprises a duct for delivering inert gas.

The control device 5 controls the solenoid valve 15 so that the solenoid vale 15 delivers gas before the beginning of the welding for a pre-start time Tpi and, in particular, before the welding arc is ignited. Furthermore, the control device 5 controls the solenoid valve so that the solenoid valve delivers gas during the entire welding time, in particular during the entire time in which the welding arc is present. Furthermore, the control device 5 controls the solenoid valve 15 so that the solenoid valve 15 delivers gas after the end of the welding for a post-end tome Tpf and, in particular, after the welding arc has extinguished.

Furthermore, the user interface 12 is configured for receiving an eighth command from an operator for setting a value of the pre-start time Tpi.

Furthermore, the user interface 12 is configured for receiving an ninth command from an operator for setting a value of the post-end time Tpf.

The control device is connected to the user interface 12 for receiving the eighth command and/or the ninth command and for setting the pre-start time Tpi and the post-end time Tpf, respectively.

In other words, in this embodiment, the control device 5 is configured for carrying out, between step b) and step c) described above, the following operation: controlling the solenoid valve 15 so that it delivers gas for the pre-start time Tpi, which begins in the moment in which it detects that the button 13 has been operated (step b) and before the beginning of the supply of the output electrical current (step c).

Furthermore, the control device 5 is configured for allowing gas to be delivered through the solenoid valve 15 for the entire welding time, namely for the entire time in which an output electrical current lout is supplied.

Furthermore, the control device 5 is configured for controlling the solenoid valve 15 so that it allows gas to be delivered for a post-end time Tdf, which begins in the moment in which the output electrical current lout reaches zero.

Gas delivery times in the pre-start time Tpi and in the post-end time Tpf allow welding protection gas to be delivered, which improves the quality of the weld.

Furthermore, the square waveform improves the welding process even when it is performed by less experienced operators, since it overheats the pieces to be welded less and avoids holes in the pieces to be welded. Furthermore, thermally altered areas of the pieces to be welded are smaller compared to the prior art. Furthermore, thanks to the invention, the welded part has a more homogeneous surface. Furthermore, thanks to the invention, the quality parameters of the weld, such as for example seal of the weld between two pieces, are better compare to the prior art.

Finally, it is clear that the invention described herein can be subjected to changes and variations, without for this reason going beyond the scope of protection of the appended claims.

## Claims

1. A motor driven welder comprising:
an internal combustion engine (2);
an electric generator (3) connected to the internal combustion engine (2) for being driven by the internal combustion engine (2) and for receiving kinetic energy from the internal combustion engine (2), and having a first electrical output (8) for providing electrical energy;
a bridge (4) of controllable switches electrically connected to the first electrical output (8) of the electric generator (3) for receiving electrical energy, and comprising a second electrical output (10) for supplying a welding tong (6) through an output electrical current (Iout);
a control device (5) connected to the bridge (4) of controllable switches, for controlling the switches, and coupled to the second electrical output (10) for detecting the output electrical current (Iout);
the control device (5) being configured for controlling the bridge (4) of controllable switches so that the second electrical output (10) provides an output electrical current (Iout) which is at least in a periodic time interval, in particular a maximum current value (Imax) and a minimum current value (Imin) of the periodic waveform, which are both greater than zero or both lower than zero.

2. The motor driven welder according to claim 1, wherein the control device (5) is configured for controlling the bridge (4) of switches so that the second electrical output (10) provides an output electrical current (Iout) which has a square waveform and in which, the maximum current value (Imax) and the minimum current value (Imin) are both greater than zero or both lower than zero.

3. The motor driven welder according to any one of the previous claims, comprising a user interface (12) configured for receiving a first command from an operator for setting the maximum current value (Imax) of the periodic waveform of the output electrical current (Iout); the control device (5) being connected to the user interface (12) for receiving the first command and controlling the bridge (4) of switches, so that the maximum current value (Imax) of the periodic waveform of the output electrical current (Iout) is equal to that set up by the operator.

4. The motor driven welder according to any one of the previous claims, comprising a user interface (12) configured for receiving a second command from an operator for setting a frequency (f) of the periodic waveform of the output electrical current (Iout); the control device (5) being connected to the user interface (12) for receiving the second command and controlling the bridge (4) of switches, so that the frequency (f) of the periodic waveform of the output electrical current (Iout) is equal to that set by the operator.

5. The motor driven welder according to any one of the previous claims, comprising a user interface (12) configured for receiving a third command from an operator for setting a duty cycle (dT) of the periodic waveform of the output electrical current (Iout); the control device (5) being connected to the user interface (12) for receiving the third command and controlling the bridge (4) of switches, so that the duty cycle (dT) of the periodic waveform of the output electrical current (Iout) is equal to that set by the operator.

6. The motor driven welder according to any one of the previous claims, comprising a user interface (12) configured for receiving a fourth command from an operator, indicative of a minimum current value (Imin) of the periodic waveform of the output electrical current (Iout); the control device (5) being connected to the user interface (12) for receiving the fourth command and being configured to operate on the switches of the bridge (4), so that the minimum current value (Imin) of the periodic waveform of the output electrical current (Iout) is equal to that set by the operator via the fourth command; preferably the fourth command indicates a fractional value less than 1 to be multiplied by the maximum current value (Imax).

7. The motor driven welder according to any one of the previous claims, wherein the control device (5) is configured for controlling the output electrical current (Iout) so as to implement a welding process with Tungsten electrodes and the use of inert gas and with the function of triggering the arc by contact.

8. The motor driven welder according to any one of the previous claims, comprising a user interface (12) configured for receiving a sixth command from an operator for setting an end deramp time (Tend) of the output electrical current (Iout); the control device (5) being configured for receiving a signal that indicates the end of the welding and being connected to the user interface (12) for receiving the sixth command; the control device (5) being configured for controlling the bridge (4) of switches, so that the output electrical current (Iout) gradually diminishes from the moment it receives the first signal, according to the time plot of the descending ramp shape of the duration of the end deramp time (Tend).

9. The motor driven welder according to any one of the previous claims, comprising a user interface (12) configured for receiving a seventh command from an operator for setting an end current value (Iend) of the output electrical current (Iout); the control device (5) being configured for receiving a signal that indicates the end of the welding and being connected to the user interface (12) for receiving the seventh command; the control device (5) being configured for controlling the bridge (4) of switches, so that the output electrical current (Iout) gradually diminishes from the moment it receives the signal, according to the time plot of the descending ramp shape from the instantaneous current value up to a current value equal to the end current value (lend).

10. The motor driven welder according to any one of the previous claims, comprising a user interface (12) connected to the control device (5) and configured for receiving an eighth command from an operator for setting a value of the pre-start time (Tpi); and a solenoid valve (15) connected to the control device (5) and having a valve inlet (16) for receiving gas, and a valve outlet (17) for delivering gas; the control device (5) being configured for controlling the solenoid valve (15) and the bridge (4) of switches, so that the solenoid valve (15) delivers gas for a pre-start time (Tpi) and, only after the pre-start time (Tpi) the bridge (4) of diodes delivers an output electrical current (Iout).

11. The motor driven welder according to any one of the previous claims, comprising a user interface (12) connected to the control device (5) and configured for receiving a ninth command from an operator for setting a value of the post-end time (Tpf); and comprising a solenoid valve (15) connected to the control device (5) and having a valve inlet (16) for receiving gas, and a valve outlet (17) for delivering gas; the control device (5) being configured for controlling the solenoid valve (15) so that the solenoid valve (15) delivers gas for a post-end time (Tpf) after the moment in which the welding arc extinguishes.

12. The control method of a motor driven welder; the motor driven welder comprising an internal combustion engine (2); an electric generator (3) connected to the internal combustion engine (2) for being driven by the internal combustion engine (2) and for receiving kinetic energy from the internal combustion engine (2), and having a first electrical outlet (8) for supplying electrical energy; a controllable bridge (4) of switches electrically connected to the first output (8) of the electric generator (3) for receiving electrical energy and comprising a second electrical output (10) for supplying a welding tong (6) through an output electrical current (Iout);
the method comprising the steps of: controlling the delivery of the output electrical current (Iout) in a manner that is at least in a periodic time interval, in particular a maximum current value (Imax) and a minimum current value (Imin) of the periodic waveform are both greater than zero or both less than zero.

13. The control method according to the claim 12, comprising the step of controlling the output electrical current (Iout) so that it has a square waveform and in which the maximum current value (Imax) and the minimum current value (Imin) are both greater than zero or both lower than zero.

14. The control method according to claim 12 or 13, comprising the step of:
- receiving at least one command from an operator selected by the control group: a first command for setting the maximum current value (Imax) of the periodic waveform of the output electrical current (Iout); a second command for setting a frequency (f) of the periodic waveform of the output electrical current (Iout); a third command for setting a duty cycle (dT) of the periodic waveform of the output electrical current (Iout); and a fourth command indicative of a minimum current value (Imin) of the periodic waveform of the output electrical current (Iout);
- controlling the output electric current (Iout) in a manner that meets at least one of the following conditions: the maximum current value (Imax) of the periodic waveform of the output electric current (Iout) is equal to that set by the operator via the first command; the frequency (f) of the periodic waveform of the output electrical current (Iout) is equal to that set by the operator via the second command; the duty cycle (dT) of the periodic waveform of the output electrical current (Iout) is equal to that set by the operator via the third command; the minimum current value (Imin) of the periodic waveform of the output electrical current (Iout) is equal to that set by the operator via the fourth command.

15. The control method according to one of the claims 12 to 14, comprising the step of receiving: a signal that indicates the end of the welding; and a sixth command from an operator for setting an end deramp time (Tend) of the output electrical current (Iout) and/or a seventh command from an operator for setting an end current value (Iend) of the output electrical current (Iout); the method comprising the steps of: controlling the output electric current (Iout) so that it gradually diminishes from the moment it receives the first signal, according to a time plot with a descending ramp shape of the duration of the end deramp time (Tend) and/or from the instantaneous current value up to an end current value (lend).
